(19)

**Europäisches Patentamt**
**European Patent Office**
**Office européen des brevets**

(11) **EP 4 524 716 A1**

(12) **EUROPEAN PATENT APPLICATION**

(43) Date of publication:
**19.03.2025 Bulletin 2025/12**

(51) International Patent Classification (IPC):
***G06F 3/06*** (2006.01)

(21) Application number: **24195931.1**

(22) Date of filing: **22.08.2024**

(52) Cooperative Patent Classification (CPC):
**G06F 3/064; G06F 3/061; G06F 3/0689**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 US 202318465347**

(71) Applicant: **Avago Technologies International Sales**
**Pte. Limited**
**Singapore 768923 (SG)**

(72) Inventor: **Prakash, Jana Arun**
**Irvine, 92618 (US)**

(74) Representative: **Dilg, Haeusler, Schindelmann Patentanwaltsgesellschaft mbH**
**Leonrodstraße 58**
**80636 München (DE)**

(54) **METHOD AND SYSTEM FOR LINEAR RAID LEVEL FOR LARGE CAPACITY AND PERFORMANCE**

(57) A method may include receiving, by one or more controllers, a segment of data to write to a logical device, the logical device having a plurality of physical disks. The method may include causing, by the one or more controllers, to store a first plurality of contiguous data strips of the segment of data on a first physical disk of the plurality of the physical disks up to a first threshold. In response to reaching the first threshold, a second plurality of contiguous data strips of the segment of data can be stored on a second physical disk of the plurality of the physical disks, the second plurality of contiguous data strips following sequentially after the first plurality of contiguous data strips. The method may include splitting of the segment of data into the first plurality of contiguous data strips and the second plurality of contiguous data strips.

FIG. 3

**Description**

BACKGROUND

The present disclosure relates generally to the field of Redundant Array of Independent Disks (RAID) systems, and more specifically to a linear RAID level system. Typical storage controllers can be a "Just a Bunch Of Disks" (JBOD) system or the RAID system, wherein the former denotes a collection of storage drives, while the latter represents a storage technology employed to enhance read and write speeds or ensure fault tolerance. The RAID system involves the distribution of data across multiple hard disks, commonly dispersing fragments of a single file among different disks. This approach improves speed and provides protection against disk failures. The JBODs are individual drives exposed to the operating system (OS). From a storage controller perspective, each JBOD can be considered a separate drive. Capacity of multiple JBODs can be combined at the OS level. For example, a JBOD configuration comprising four 260 GB drives can provide a total usable space of 1040 GB. The RAID system can integrate various performance enhancements, such as striping, mirroring, parity, and caching, whereas JBOD typically lacks these performance-enhancing features.

SUMMARY OF THE DISCLOSURE

In existing RAID storage systems, multiple storage devices can be used to implement a logical volume of data. A logical device (LD) refers to the virtual disk or volume that is created by combining multiple physical disks. A physical storage device, such as a hard disk drive (HDD), a solid state drive (SSD), a hybrid drive (that combines features of the HDD and the SSD), or a network attached storage (NAS) drive can support multiple logical devices. For example, the physical storage device can be partitioned into distinct and isolated sections, each of which can behave as an independent LD. Each LD can use a portion of an available storage on the single physical device. The HDDs use magnetic storage to read and write data onto spinning platters. The SSDs utilize NAND-based flash memory to provide data access speeds, enhanced durability, and lower power consumption. The hybrid drives combine features of both HDDs and SSDs, e.g., the hybrid drive can include one or more of the HDDs and one or more of the SSDs to provide a balance between storage capacity and improved performance. The NAS systems include HDDs or SSDs using them as storage mediums; RAM and processors, e.g., CPU; and network interfaces, e.g., Ethernet ports, to connect the NAS to local area networks (LANs) or wide area networks (WANs).

By utilizing a RAID controller or software-based RAID management, the multiple physical disks can be seamlessly integrated and presented as a unified drive to the OS. When a user uses up a maximum capacity of the drive (e.g., for a video storage when watching videos that can consume large capacity of storage), the drive capacity may need to be expanded. Typically, the JBODs cannot be linked together at a controller level. The typical JBODs are isolated within the storage controller. For example, each JBOD device is typically isolated and exposed individually to an operating system (OS). Therefore, logically adding the capacity of multiple JBODs needs to be performed at the OS level. Additional management needs to be implemented through a software on a host side to add capacity to an existing volume (e.g., Dynamic Disks in Windows Volume Management® software, such as those supplied by Microsoft of Redmond, U.S.A.). The OS level management requires software handling of multi-arm I/O detection and I/O splitting, determining the destination physical device for an I/O and other operations, which can degrade the performance under heavy workloads.

An I/O can refer to a read or write operation issued to the disk drives that are included in a RAID array. For example, the read operations in the RAID array can involve data that is retrieved from the disk drives into memory. The read operation can be an individual file retrieval or a system read request. The write operations can involve data that is sent from the memory to the disk drives for storage, for example, writing a new file or modifying existing data.

A typical RAID configuration supports online capacity expansion (OCE) operation, but the OCE operation can be expensive with respect to the resources since the movement of existing data is required. The OCE is the capability of the RAID system facilitating an increase of the storage capacity of an existing RAID array while the system is still operational and without losing data. The OCE provides a convenient way to add more storage space to a RAID system without rebuilding or reconfiguring the entire array. Initially, there can be an existing RAID array having a certain number of drives and a specific storage capacity. The array may already be configured with a RAID level such as RAID 0, RAID 5 or RAID 6. To expand the capacity, additional drives can be added to the RAID system. The additional drives typically have the same type and are compatible with the existing RAID array. The number of the added drives can vary depending on the RAID level and the desired capacity increase. The RAID controller, which manages the array, recognizes the newly added drives. The user can then access the RAID controller management software or interface to initiate the OCE process. During the online capacity expansion process, the RAID controller redistributes the existing data across the newly added drives. The redistribution process ensures that the data is spread across all drives in the expanded array. The redistribution process is performed in the background while the RAID system remains operational. When the data redistribution is complete, the capacity of the RAID array is increased. The additional storage space provided by the newly added drives becomes available for use by the system.

RAID 0 (R0) is a configuration within the RAID storage technology. In the R0 setup, data is divided into small portions, or strips, and each strip can be written across multiple drives almost simultaneously, concurrently or otherwise in or near real time. The data strips are the individual units into which data is stripped or divided and distributed across multiple disks by the processor(s) of the RAID system. The strips can be distributed across multiple disks in a systematic manner. By spreading the data across multiple drives, the R0 system allows for parallel data retrieval and storage, resulting in faster read and write speeds. When the R0 system utilizes a writethrough (WT) method, the data is written to the storage during a write operation. In WT method, when an application writes data, the data is directly transferred to the disk or storage device. The write operation is considered complete when the data is successfully written to the storage and the success status is received by the initiator of the write message.

The JBODs can be treated as a single drive exposed to the host that operates in a writethrough (WT) mode. In this aspect, the JBODs are similar to single drive WT R0 LDs. R0 drives can be expanded by adding more drives. However, expansion of storage in the R0 system requires data movement to the newly added drives. The OCE operation is time consuming (e.g., it can take one or more days for a single LD), and it affects the I/O performance. Only one OCE operation on a very limited number of LDs can be active at a time. For example, one OCE operation can be active on one LD at a time. The input/output (I/O) performance of the R0 system typically cannot match the I/O performance of the JBODs because the JBODs can support read/write operations of large contiguous data on the drive without the I/O splits. During the OCE operation, the I/Os in the R0 system are diverted to a firmware (FW) for watermark checking; such diversion can degrade the I/O performance of the R0 system. I/O splitting can be a frequent event in multi-drive RAID levels since consecutive strips are stored in different arms. The frequent splitting of I/Os degrades I/O performance of RAID systems. For multi-drive R0 system, the maximum continuous data written to one arm by a single I/O is typically limited by the strip size. To reduce splitting and to handle smaller length I/Os (with fewer resources), implementation of the RAID level in a MegaRAID® Avenger 1® controller (such as those supplied by Broadcom of Irvine, U.S.A.) typically limits the maximum I/O size to 1 MB. In contrast, the I/Os can be up to maximum 8 MB size on Avenger 1® controllers in JBOD-only implementations because the on-disk data layout is relatively flat. Typically, in RAID implementations there is no RAID level that supports almost instant OCE. While the OCE operation is in progress, functionality of the controller is restricted (for example, no LD creation or import, no preserved cache presence or generation, no firmware upgrade are allowed and limited background operations (BGOPS) are permitted). Controller variants with a complete RAID solution (including the OCE) are more expensive than JBOD variants because additional physical components such as DDR, battery, flash for cache backup, complex parity level support in hardware, and the like are required by the complete RAID solution.

The number of drives supported in RAID implemented are smaller compared to JBOD implementations. For example, the complete RAID solution is more complex, more expensive, and provides a lesser number of drive support. A Double Data Rate-less Error Vector Propagation (DDR-less EVP) RAID system technology can operate without the need for Double Data Rate (DDR) memory modules. An implementation of the RAID level can support 240 drives and DDR-less EVP implementation supports 32 drives while the controller hardware (HW) of AVENGER 1® supports 2048 drives. The JBOD variants of storage systems can be more cost effective and leaner, e.g., less complex in comparison to the complete RAID. A user may prefer the JBOD variant that can provide access to many devices (e.g., greater than 1000 devices) at lesser cost (for example, AVENGER 1® can supports 2048 JBOD drives).

The present disclosure describes a new highly expansible RAID level (or RAID 0 Linear (R0L)) design with a linear on-drive data layout (to perform an instant or almost instant OCE). The R0L can support the read/write operations completely automated in hardware for large contiguous data on the physical drives to achieve high performance that can be comparable to performance of the JBODs. The maximum number of drives supported on the controller is the same or substantially the same as the JBOD-only variants of the storage. As substantially no additional physical components are required, a new controller variant with all LDs in the R0L system can have a cost comparable to the typical JBOD-only variants of the storage.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, method may include receiving, by one or more controllers, a segment of data to write to a LD, the LD having a plurality of physical disks. The method may also include causing, by the one or more controllers, to store a first plurality of contiguous data strips of the segment of data on a first physical disk of the plurality of the physical disks up to a first threshold. In response to the one or more controllers and reaching the first threshold, a second plurality of contiguous data strips of the segment of data can be stored on a second physical disk of the plurality of the physical disks, the second plurality of contiguous data strips following sequentially after the first plurality of contiguous data strips. Other embodiments of this aspect include corresponding computer systems, apparatus, and computer programs recorded on one or more computer storage devices, each configured to perform the actions of the methods.

Implementations may include one or more of the following features. The segment of data can be split into the first plurality of contiguous data strips and the second plurality of contiguous data strips. The method may include storing up to the first threshold that is set to a value equal to or less than a capacity of the first physical disk of the plurality of the physical disks to store segments of data. The method may include causing, by the one or more controllers, to distribute across the first physical disk and the second physical disk the first plurality of contiguous data strips of the segment of data on the first physical disk and the second plurality of contiguous data strips of the segment of data on the second physical disk. The method may include causing, by the one or more controllers, to generate mapping tables for each physical disk that map logical addresses for the LD to physical addresses on the physical disks. The method may include causing, by the one or more controllers, to determine a number of physical disks for each segment of data based at least upon a predefined set of one or more rules stored in a memory.

In one general aspect, a circuitry may be configured to receive a segment of data to write to a LD, the LD having a plurality of physical disks. The circuitry may also be configured to store a first plurality of contiguous data strips of the segment of data on a first physical disk of the plurality of the physical disks up to a first threshold. In response to reaching the first threshold, a second plurality of contiguous data strips of the segment of data can be stored on a second physical disk of the plurality of the physical disks, the second plurality of contiguous data strips following sequentially after the first plurality of contiguous data strips. Other embodiments of this aspect include corresponding computer systems, apparatus, and computer programs recorded on one or more computer storage devices, each configured to perform the actions of the methods.

Implementations may include the segment of data that is split into the first plurality of contiguous data strips and the second plurality of contiguous data strips. The circuitry may be configured to store up to the first threshold that is set to a value equal to or less than a capacity of the first physical disk of the plurality of the physical disks to store segments of data. The circuitry can be further configured to distribute across the first physical disk and the second physical disk the first plurality of contiguous data strips of the segment of data on the first physical disk and the second plurality of contiguous data strips of the segment of data on the second physical disk. The circuitry can be further configured to generate mapping tables for each physical disk that map logical addresses for the LD to physical addresses on the physical disks. The circuitry can be further configured to determine a number of physical disks for each segment of data based at least upon a predefined set of one or more rules stored in a memory. Implementations of the described techniques may include hardware, a method or process, or a computer tangible medium.

In one general aspect, a system may include one or more controllers configured to receive a segment of data to write to a LD, the LD having a plurality of physical disks. The one or more controllers of the system can be configured to cause a first plurality of contiguous data strips of the segment of data to store on a first physical disk of the plurality of the physical disks up to a first threshold. In response to the one or more controllers and reaching the first threshold, a second plurality of contiguous data strips of the segment of data can be stored on a second physical disk of the plurality of the physical disks, the second plurality of contiguous data strips following sequentially after the first plurality of contiguous data strips.

The one or more controllers of the system can be further configured to cause splitting of the segment of data into the first plurality of contiguous data strips and the second plurality of contiguous data strips. The one or more controllers of the system may be further configured to store up to the first threshold that is set to a value equal to or less than a capacity of the first physical disk of the plurality of the physical disks to store segments of data. The one or more controllers of the system can be further configured to distribute across the first physical disk and the second physical disk the first plurality of contiguous data strips of the segment of data on the first physical disk and the second plurality of contiguous data strips of the segment of data on the second physical disk. The one or more controllers of the system can be further configured to generate mapping tables for each physical disk that map logical addresses for the LD to physical addresses on the physical disks. The one or more controllers of the system can be further configured to determine a number of physical disks for each segment of data based at least upon a predefined set of one or more rules stored in a memory.

In some embodiments, the system can include the one or more controllers that are further configured to cause capacity of storage across the logical device to expand without moving data between the physical disks. In some embodiments, the one or more controllers of the system are further configured to cause performing an online capacity expansion (OCE) operation; issuing one or more input/output (I/O) operations to store the first plurality of contiguous data strips of the segment of data on the first physical disk up to the first threshold; and executing the one or more I/O operations on the first physical disk in or near real time when the OCE operation is executed. In some embodiments, a maximum quantity of the logical devices supported by the system can be equal to a quantity of Just a Bunch Of Disks (JBOD) variants. Other embodiments of this aspect include corresponding computer systems, apparatus, and computer programs recorded on one or more computer storage devices, each configured to perform the actions of the methods.

BRIEF DESCRIPTION OF THE DRAWINGS

Some embodiments of the present disclosure are now described, by way of example only, and with reference to the accompanying figures. The same reference number represents the same element or the same type of element on all figures.

FIG. 1 is a block diagram of a Redundant Array of Independent Disks (RAID) 0 Linear (R0L) storage system in accordance with at least some embodiments of the present disclosure;

FIG. 2 is a block diagram depicting details of a data layout for a R0L system having n-drives in accordance with at least some embodiments of the present disclosure;

FIG. 3 is a block diagram of a R0L storage system in accordance with at least some embodiments of the present disclosure;

FIG. 4 is a flowchart describing a method to execute I/Os in a R0L system in accordance with at least some embodiments of the present disclosure;

FIG. 5A is a block diagram depicting an embodiment of a computing environment including one or more access points in communication with one or more wireless devices or stations; and

FIGS. 5B and 5C are block diagrams depicting embodiments of computing devices useful in connection with the methods and systems described herein.

DETAILED DESCRIPTION

The following disclosure provides different embodiments, or examples, for implementing different features of the provided subject matter. Specific examples of components and arrangements are described below to simplify the present disclosure. These are, of course, merely examples and are not intended to be limiting. In addition, the present disclosure may repeat reference numerals and letters in the various examples. This repetition is for the purpose of simplicity and clarity and does not in itself dictate a relationship between the various embodiments and configurations discussed.

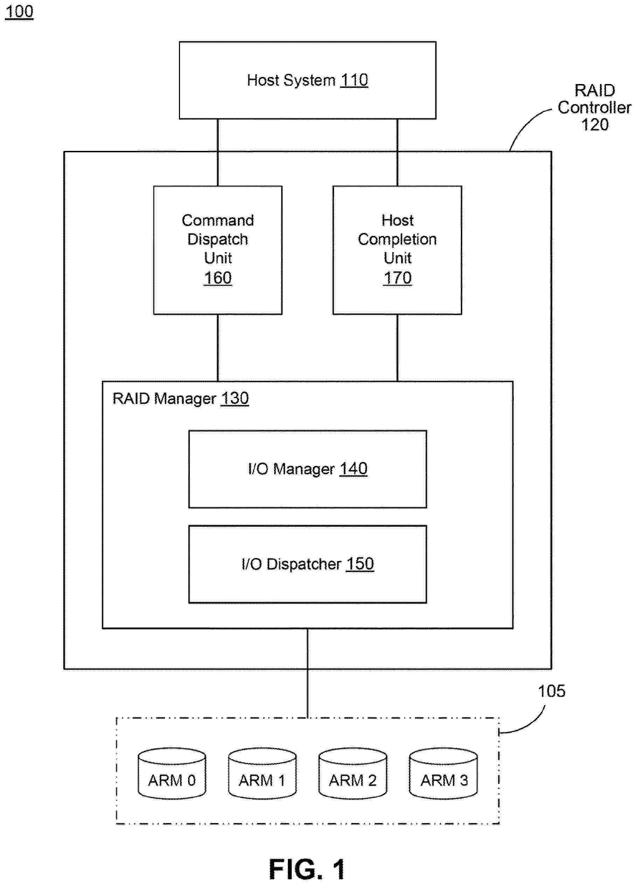

FIG. 1 is a block diagram of a Redundant Array of Independent Disks (RAID) 0 Linear (R0L) storage system 100. In this embodiment, an R0L system 100 includes host 110, which accesses or alters data stored on a LD by transmitting Input/Output (I/O) commands for the LD to a controller 120. In some embodiments, the R0L system 100 can include an array 105 of the storage devices or the physical disks Arm 0, Arm 1, Arm 2, and Arm 3.

While in operation, RAID controller 120 translates the I/O operations from host 110 to map logical addresses requested by host 110 with physical locations/addresses on the storage devices 105. The RAID controller 120 may be implemented as custom circuitry, as a processor executing programmed instructions stored in program memory, or some combination thereof. In one embodiment, the RAID controller 120 comprises a Host Bus Adapter (HBA) for the host 110.

In some embodiments, the controller 120 (that can be, for example, the RAID controller) can include a command dispatch unit (CDU) 160, and a host completion unit (HCU) 170. The RAID controller 120 can include a control system or RAID manager (RM) 130. The RAID manager 130 can include an I/O manager 140 and an I/O dispatcher 150. The RAID manager 130 performs RAID control operations such as detecting coupled storage devices, translating host I/O requests for logical addresses into RAID requests for physical addresses, performing patrol reads, performing consistency checks, etc.

While RAID controller 120 is illustrated in FIG. 1 as being directly coupled with multiple storage devices, in some embodiments RAID controller 120 may be coupled with various storage devices via a switched fabric. A switched fabric comprises any suitable combination of communication channels operable to forward/route communications for a storage system, for example, according to protocols for one or more of Small Computer System Interface (SCSI), Serial Attached SCSI (SAS), Fibre Channel, Ethernet, Internet SCSI (ISCSI), etc. In one embodiment, a switched fabric comprises a combination of SAS expanders that link to one or more target storage devices in the array 105.

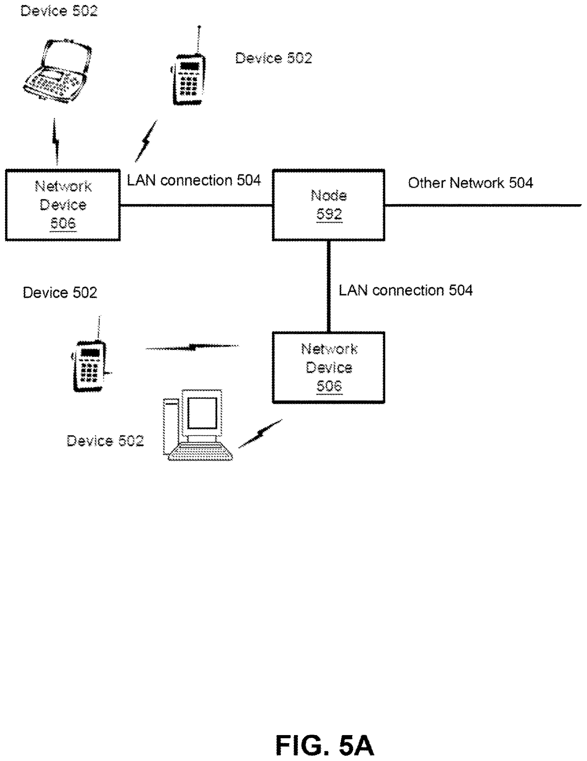

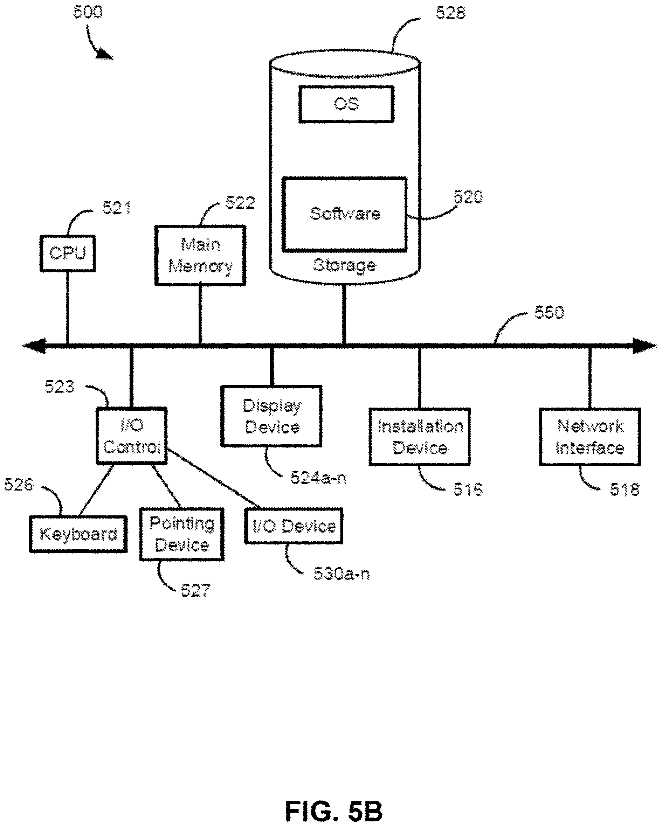

Each of the components (e.g., the I/O manager 140, the I/O dispatcher 150, the CDU 160, the HCU 170, and the like) of the R0L system 100 can be implemented using the hardware components or a combination of software with the hardware components of a computing system (e.g., computing system 500 described in connection with FIGS. 5A and 5B, etc.).

An illustrative LD is shown in FIGS. 1-3. For example, the LD can comprise allocated storage space and data implemented on storage devices Arm 0, Arm 1, Arm 2, and Arm 3. In some embodiments, another number of the arms may be used in the RAID array, e.g., more than four storage devices or less than four storage devices. Although FIGS. 1-3 illustrate a certain number of storage devices, implementations may use any number of storage devices, including a much larger number of storage devices than shown. The RAID controller 120 represents the LD to host 110 as a continuous set of Logical Block Addresses (LBAs). Thus, host 110 does not waste processing resources determining the exact physical locations of data on RAID storage system 100. RAID controller 120 may implement an LD on one or many storage devices.

In some embodiments, the storage devices Arm 0, Arm 1, Arm 2, and Arm 3 can implement the storage capacity of the LD and are capable of writing and reading data in a computer readable format. For example, the storage devices may comprise magnetic hard disks, solid state drives, optical media, etc. compliant with protocols for SAS, Serial Advanced Technology Attachment (SATA), Fibre Channel, etc.

The particular arrangement, number, and configuration of components described herein is exemplary and non-limiting.

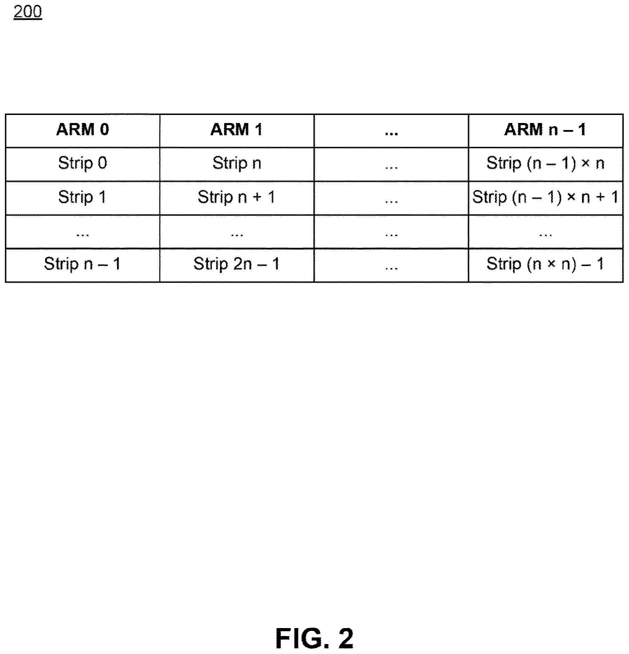

FIG. 2 is a block diagram depicting details of a data layout for a RAID 0 Linear (ROL) system having n-number of drives. In some embodiments, the contiguous segment of data can include one or more strips (for example, Strip 0, Strip 1, ... , Strip n?1, Strip n, Strip n+1, ... , Strip 2n?1, ...). A segment of data can refer to a set of data elements or units that are grouped together for storage, processing, or transmission purposes. For example, in a file system, data is typically stored in segments on a storage medium such as a hard disk. A segment of data can represent a fixed portion of the file and is allocated and accessed as a unit. The segment can include one or more strips, the strips can include a plurality of the blocks or logical block addresses (LBA). For example, a plurality of the LBAs (e.g., a fixed number for the volume, for example, sixteen LBAs) can be referred to as a strip. The LBA can be the smallest unit in the filesystem and a strip can represent multiple consecutive LBAs. For example, the LBA (that can have a size of, for example, 4K) can be the smallest unit of data stored on the device. The I/O can have one or more blocks of data. Each block can map to a specific LBA. The contiguous data strips can refer to the data strips that are adjacent to each other, e.g., the contiguous data strip is not broken apart. For example, the data Strip 0 and Strip 1 are contiguous when Strip 0 is adjacent to Strip 1. For example, the data Strip n?1, Strip n, Strip n+1 are contiguous when Strip n?1 is adjacent to Strip n and Strip n is adjacent to Strip n+1.

The RAID system can have one or more arms (for example, Arm 0, Arm 1, ... , Arm n?1). For reliability purposes, to recover the data more efficiently the typical layout of the R0 system involving n-number of arms (e.g., Arm 0, Arm 1, ... , Arm n?1) and a number of strips (e.g., Strip 0, Strip 1, ... , Strip n?1, Strip n, Strip n+1, ... , Strip 2n?1, ...) has the following data layout. The first Arm 0 includes Strip 0, the next Strip 1 is included in the next Arm 1, ... , the last Arm n?1 includes Strip n?1, the next Strip n is included in the first Arm 0, the next Strip n is included in the next Arm 1, ... , the last Arm n?1 includes Strip 2n?1, .... As a result, Arm 0 includes Strip 0, Strip n, ... ; Arm 1 includes Strip 1, Strip n+1, ... ; ... ; Arm n?1 includes Strip n?1, Strip 2n?1, ....

FIG. 2 illustrates the data layout for n-drive LD data layout in the R0L system that is different from the typical R0 data layout described above. More specifically, to support a linear data layout in the R0L system, consecutive strips are stored contiguously in the same arm for the entire range of strips that the arm can support before moving on to the next arm. Therefore, when a new arm is added, the starting strip number of the new arm is the summation of one and the last strip number of the previous arm. For example, the first Arm 0 includes Strip 0, the next Strip 1, and the subsequent strips including Strip n?1. The next Arm 1 includes the Strip n, the next Strip n+1, and the subsequent strips including Strip 2n?1. The last Arm n?1 includes Strip $(n-1) \times n$, Strip $(n-1) \times n + 1$, and the subsequent strips including Strip $(n \times n) - 1$. As a result, Arm 0 includes Strip 0, Strip 1, ... , Strip n?1; Arm 1 includes Strip n, Strip n+1, ... , Strip 2n?1; Arm n?1 includes Strip $(n-1) \times n$, Strip $(n-1) \times n + 1$, ... , Strip $(n \times n)$ ? 1.

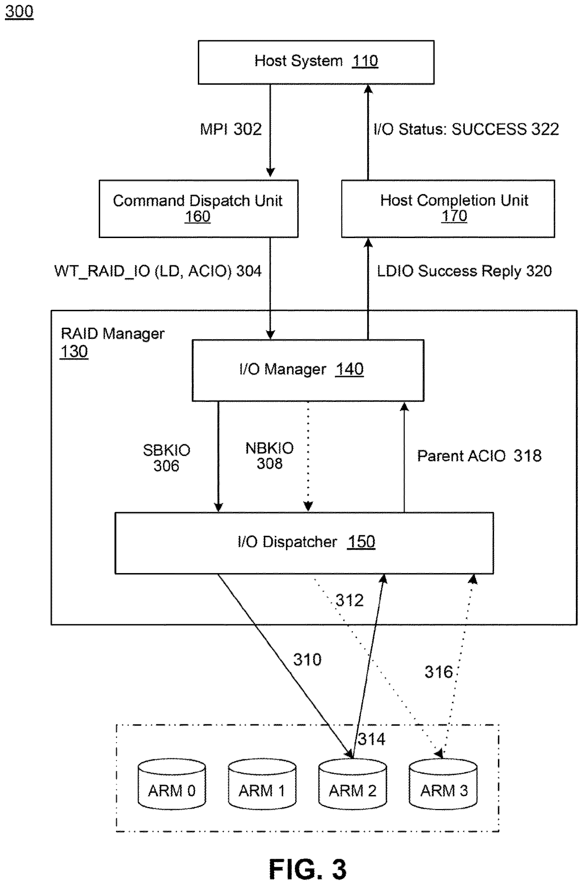

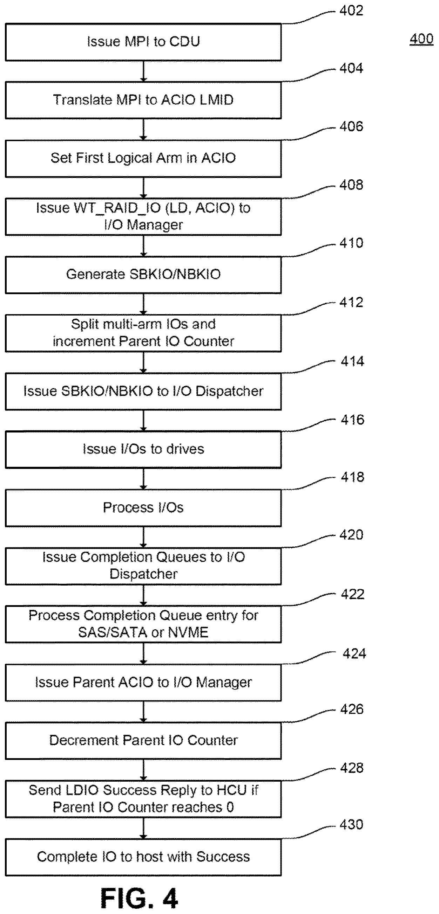

A reference is now made to I/O execution in hardware. FIG. 3 is a block diagram illustrating components of a R0L system 300 executing the I/Os. FIG. 4 is a flowchart describing a method 400 to execute I/Os in a R0L system 100, 300. The method 400 can be executed, performed, or otherwise carried out by the system 100, the computer system 500 described in connection with FIGS. 5A and 5B, or any other computing devices described herein. In brief overview, the method can execute I/Os in a R0L system 100, 300 such that a segment of data, e.g., data transferred in the I/O, is split into a first plurality of contiguous data strips and a second plurality of contiguous data strips. The method 400 can store the first plurality of contiguous data strips of the segment of data on the first physical disk and the second plurality of contiguous data strips of the segment of data on the second physical disk.

In some embodiments, the RAID controller 120 initializes a discovery process (e.g., when RAID storage system 100 is first implemented) in order to identify which storage devices Arm 0, Arm 1, Arm 2, or Arm 3 it is coupled with. The controller 120 identifies storage devices that are coupled with the RAID controller 120. In one embodiment, such identification includes actively querying the device name and capacity of each storage device identified during a discovery process and storing that information in memory at the RAID controller 120 for later reference. In a further embodiment, the device address (e.g., SAS address) and capacity of each storage device is programmed into a memory of the controller 120 through a management interface at RAID controller 120.

In some embodiments, the RAID controller 120 receives input requesting the creation of a RAID volume. In one embodiment, this input is provided by the host 110, and the input indicates a size for the LD, an identifier for the LD, and further indicates a requested RAID level for the LD (e.g., RAID 0, 1, 5, 10, 50, etc.).

In some embodiments, rows of RAID storage may be allocated to store data for the LD (e.g., based on a starting and ending logical address for the LD). A row is a set of physical locations/addresses distributed across the storage devices. Each row includes a strip of data for each storage device. A strip can refer to an allocated space for one or more segments of data for one or more logical addresses (or parity/redundancy data for such logical addresses) on a specific storage device. The number of logical addresses stored per strip is referred to as the "depth" of a strip.

When the physical locations on the storage devices have been allocated for the LD, the RAID manager 130 proceeds to map the physical addresses of the storage devices to logical addresses of the device. In some embodiments, during the mapping process, mapping tables for each physical drive that map logical addresses for the LD to physical addresses on the physical drives can be generated. The term "generate" refers to the process of creating or producing, for example, new data, information, or content. Typically generating involves using a computer program or algorithm to create the new data, information, or content (e.g., a mapping table) based on certain rules, patterns, or input.

For example, mapping may include allocating logical addresses for the volume to specific rows of data, and then assigning rows of data to physical locations on the storage devices. The RAID manager 130 stores this mapping data in memory (e.g., at RAID controller 120 or on the storage devices themselves) as, for example, mapping tables, in order to enable translation between logical addresses requested by the host 110 and physical addresses on the RAID array 105 of the storage devices.

In some embodiments, the RAID controller 120 of FIG. 1 can map Logical Block Addresses (LBAs) with physical addresses in the R0L storage system 100. For example, the RAID controller 120 can receive an I/O request from host 110 for processing one or more LBAs of an LD. In some embodiments, the RAID manager 130 of the RAID controller 120 determines the LBAs requested by host 110 and reviews the LBA addressing information for each span to identify the span that stores each requested LBA.

In some embodiments, the RAID manager 130 maps each requested LBA with a physical location on a storage device. In some embodiments, the RAID manager 130 retrieves the data for each requested LBA from the corresponding physical location on the storage device of the array 105 (e.g., by transmitting a read request to the appropriate storage devices that directs the storage devices to read data from specific physical locations).

In some embodiments, the method 400 can perform LD creation, LD state, and DDF changes. To create an LD in the R0L system using a specific application, the syntax can substantially remain the same as in the R0 system. For example, the syntax commonly used to create a R0L LD using the command line interface in Linux can use the mdadm utility. When a terminal or command prompt is opened, a user can identify the block devices (e.g., disks) that the user plans to include in the R0L array using the lsblk command. For example, two disks may be present: /dev/sdb and /dev/sdc. The mdadm command can be used to create the R0L array with the desired settings. The syntax generally can follow this pattern:

mdadm --create /dev/mdX --level=0 --raid-devices=N /dev/sdX1 /dev/sdX2 ...

/dev/mdX: The path to the RAID device file can be created (e.g., by replacing X with the desired number, e.g., /dev/md0).

--level=0L: Specifies RAID level 0L.

--raid-devices=N: Specifies the number of disks to be used in the RAID array (a user can replace N with the appropriate number).

/dev/sdX1, /dev/sdX2, etc.: The paths to the disk partitions to be included in the RAID array (a user can replace X with the appropriate disk identifier and partition number).

For example, to create a R0L array with disks /dev/sdb and /dev/sdc, the following command can be used: mdadm --create /dev/md0 --level=0L --raid-devices=2 /dev/sdb1 /dev/sdc1

The user can wait for the command to complete, indicating that the R0L LD has been created. The user can then format the newly created RAID device (/dev/mdX) with the desired filesystem using tools such as mkfs.ext4 or mkfs.xfs and the like. The user can mount the RAID device to a directory and start using the device for storage.

As described above, the difference between the R0 system and the R0L system 100 is that the RAID level is to be specified as R0L. The newly assigned value for the RAID level R0L can be set by firmware in the LD property table of the hardware units (e.g., the Command Dispatch Unit (CDU) 160, the RAID Manager (RM) 130, and the like). As in the R0 system, the LD state in the R0L system can have an offline status if any drive is missing. A Data Definition File (DDF) is a file that contains metadata or information about a database or dataset. It defines the structure, organization, and characteristics of the data stored in a specific format. No significant changes to the DDF information may be required for the LDs the R0L system 100 because the difference in the data layout is driven by the RAID level. Common LD data such as the RAID level, number of data arms, and sequence of drives are stored similarly to how they are stored in the R0 system. For example, in RAID 0, data striping is performed across multiple drives in the array, where each drive stores a portion of the data. The LD data, such as the RAID level and the sequence of drives, is typically managed and configured by the RAID controller or RAID management software rather than being stored within the array. The RAID controller or management software can keep track of the RAID configuration information separately and can use such information to determine how data is distributed across the drives during read and write operations. When the system boots up or the RAID array is accessed, the RAID controller or software identifies the drives and the order of drives based on the configuration settings.

The hardware units can detect the starting arm of an incoming I/O and split I/Os spanning across multiple arms at arm boundaries (unlike, for example, at strip boundary as it is made in the R0 system). In some embodiments, the one or more controllers of the R0L system 100 can allocate or distribute data for an I/O across strips of different or separate physical drives. Splitting of data refers to dividing the data into two or more data sets. For example, during splitting, the R0L system 100 can partition the data into segments, e.g., into segments that can include strips, which are subsequently allocated across the disks within the RAID array 105. In some embodiments, a strip can represent multiple LBAs. For example, the first plurality of contiguous data strips of the segment of data can be assigned or allocated on the first physical disk. For example, the second plurality of contiguous data strips of the segment of data can be distributed on the second physical disk.

To facilitate these operations, a new field "StripsPerArm" can be added to the LD property table (for example, in the CDU 160 or the RM 130) to store the total number of strips in an arm. In some embodiments of the R0L system 100, the number of strips per arm can vary. However, commonly, all arms have substantially the same number of strips in the R0L system 100. The value of "StripsPerArm" can be the same as the maximum number of available strips (considering the space reserved for the DDF data). Such available strips are reserved for storing data on the disk having the least capacity that is added at the time of creation. The firmware can determine and set the "StripsPerArm" field in the hardware units at the time of LD creation.

At step 402, the host system 110 can issue message passing interface (MPI) 302 to the CDU 160. The MPI 302 can refer to a communication protocol used in parallel computing to facilitate communication and coordination among multiple processes or nodes for running large scale computations. In the R0L system 100, the MPI 302 can be used for communication between the host system 110 and the RAID controller 120 to coordinate I/O operations. The MPI 302 can be also used in the R0L system 100 to manage fault tolerance in-memory. The CDU 160 can handle MPI 302 of the I/Os in the R0L system 100 substantially similarly to how the I/Os in the R0 system are handled. For example, the CDU 160 can be responsible for handling the MPI 302 of the I/Os, coordinating the execution of commands, and managing data transfers between the host system and the RAID controller.

For example, the host system 110 can initiate an I/O request, such as a read or write operation, and sends the request to the RAID controller 120. The CDU 160 within the RAID controller 120 receives the I/O request and processes it. The CDU 160 translates the request into a series of commands that will be executed by the RAID controller 120. The CDU 160 manages a command queue, where it places the translated commands. The queue organizes the commands in the order they need to be executed. The CDU 160 utilizes the MPI 302 to communicate with the host system 110, exchanging messages and coordinating the execution of commands. The CDU 160 may use MPI function calls or API provided by the MPI library to send and receive messages. The CDU 160 can retrieve commands from the command queue and executes them sequentially. The retrieval and execution processes may involve coordinating data transfers between the host system 110 and the RAID controller 120, as well as distributing the data across the disks in the R0L array 105. During data transfers, the CDU 160 manages the movement of data between the host system 110 and the RAID controller 120, facilitating retrieval of the requested data from or storing the data to the appropriate disks in the R0L array 105. When the commands are executed, the CDU 160 monitors the execution progress and updates the status of the I/O operations. The CDU 160 may use the MPI 302 to communicate completion or status updates back to the host system 110, facilitating tracking the progress of the I/O request by the host system 110.

At step 404, the CDU 160 can translate MPI 302 to an accelerated I/O (ACIO) local message ID (LMID). In some embodiments, the command dispatch unit 160 may be configured to determine if a particular command in a message is acceleratable (e.g., capable of being translated into a format or specification understood by the functional blocks in the storage controller and passed to a particular functional block to facilitate hardware acceleration). If a command is determined to be acceleratable, then the command dispatch unit 160 may implement a hardware acceleration process and generate an appropriate ACIO LMID that represents all of the information received from the host system 110 (in the command). The ACIO LMID effectively represents the command received from the host system 110 but in a different format that is understandable by the system managers (e.g., by the RAID manager 130). The command dispatch unit 160 may, in some embodiments, route the various commands (e.g., ACIO LMIDs) to one or more of the RAID manager 130, buffer manager, cache manager, and SAS manager. The routing of the commands may depend upon a type of the command and the function to be executed. The completion engine of the host I/O manager 140 may be responsible for reporting to the host system 110 that an I/O command has been completed by the controller 120. In some embodiments, the host messages can enter the storage controller through the CDU 160.

At step 406, the CDU 160 can set first logical arm in the ACIO. One of the differences of the R0L system 100, 300 (from the R0 system) is that the CDU 160 can determine the 0-based first Logical Arm Number for the I/O from a Start Strip Number divided by StripsPerArm value. The CDU 160 can set the First Logical Arm Number in the translated message frame (e.g., ACIO LMID generated from the MPI 302).

At step 408, the CDU 160 can issue a writethrough command "WT_RAID_IO" 304 (for example, ACIO that can be issued to the LDs) to the I/O Manager 140. When the translation is complete, the CDU 160 can send the message WT_RAID_IO 304 to the I/O Manager module 140 in the RM 130 with the "LD Device Handle" and the ACIO LMID. The term "LD Device Handle" refers to a unique identifier assigned to an LD in the RAID controller 120 and other components of the R0L system 100. The LD Device Handle is used to uniquely identify and manage the LDs within the RAID array 105. The LD Device Handle is typically used in management interfaces or utilities provided by the RAID controller 120 and other components of the R0L system 100 to perform various operations on the LDs. These operations may include querying the status, configuring properties, monitoring performance, or performing maintenance tasks on specific LDs. A format and representation of the LD Device Handle can vary depending on configuration(s) of the RAID controller 120 or R0L system 100. It can be a numeric or alphanumeric value that serves as a reference to a specific LD within the RAID array. The LD Device Handle can be used to identify and interact with individual LDs in the R0L system 100, enabling the LDs to perform actions such as monitoring, maintenance, or troubleshooting on specific drives as needed.

At step 410, the I/O manager 140 can generate SCSI and NVMe Backend LMIDs (SBKIO and NBKIO) 306 and 308, respectively. In some embodiments, SAS (Serial Attached SCSI) or NVMe (Non-Volatile Memory Express) drives, the I/O dispatcher 150 in a RAID controller 120 can issue the I/Os using specific commands tailored to these interfaces. Depending on whether I/O splitting is required or not, the I/O manager 140 can create one or two SBKIO 306 and NBKIO 308 for each destination drive. The NVMe drives utilize the NVMe command set for I/O operations and device management. For example, the NVMe drives can use specific commands to handle I/O operations such as Read (e.g., READ, READ DMA), Write (e.g., WRITE, WRITE DMA), and Flush (e.g., FLUSH) commands. These commands facilitate data transfer between the host system and the NVMe drives. In some embodiments, the NVMe drives also support admin commands used for device management and configuration. These commands facilitate tasks such as creating or deleting namespaces, querying drive information, updating firmware, and performing diagnostic operations. In some embodiments, the NVMe drives utilize completion queue commands to manage I/O completion notifications. These commands enable the I/O dispatcher 150 to receive notifications and track the status of I/O operations sent to the NVMe drives.

A threshold can refer to a predetermined limit or level that can be, for example, a boundary or point of reference for making decisions or taking actions. The threshold can represent the minimum or maximum value at which something is considered to have crossed a particular condition triggering a response or indicating a change. For example, a threshold can be a value beyond which there is a change in how a program executes.

In some embodiments, the R0L system 100 can store a plurality of contiguous data strips of the segment of data on one physical disk of the plurality of the physical disks up to a threshold. In some embodiments, the threshold can be set to a value equal to or less than a capacity of the physical disk of the plurality of the physical disks to store segments of data. In some embodiments, when the first threshold is reached, a second plurality of contiguous data strips of the segment of data can be stored on a second physical disk of the plurality of the physical disks. In some embodiments, the second plurality of contiguous data strips can follow sequentially after the first plurality of contiguous data strips. Following sequentially can refer to a systematic and organized progression that adheres to a specific order or arrangement. Sequential following can refer to a scenario when an element or event occurs or happens in a specific order or sequence, where each element or event follows one after another. For example, when the second plurality follows sequentially the first plurality, it means that the second plurality follows right after the first plurality.

At step 412, the I/O manager 140 can split multi-arm I/Os and increment parent I/O counter. The I/O manager 140 can split the multi-arm I/Os at arm boundaries. The I/O manager 140 can calculate the last strip of the I/O from the "Number of Blocks" field in the LMID and determine if the I/O needs to be split by comparing the last strip of the first logical arm with the last strip of the I/O.

At step 414, the I/O manager 140 can issue SBKIO 306 and/ NBKIO 308 to the I/O Dispatcher 150. For example, the I/O Manager 140 can submit the Backend LMIDs to the I/O dispatcher 150 in the RAID manager 130. If a split is performed, the I/O manager 140 can increment the I/O counter in the parent LMID.

At step 416, the I/O dispatcher 150 can issue I/Os 310, 312 to drives. The I/O dispatcher 150 can allocate SAS Mid or NVMe command (as described above) based on the drive type for each backend LMID and issue the command to the SAS Core or NVMe drive submission queue respectively.

At step 418, the Arms (for example, Arm 2 and Arm 3) can process the received I/Os 310, 312. At step 420, the Arms (for example, Arm 2 and Arm 3) can issue completion queues 314, 316 to the I/O Dispatcher 150. At step 422, the I/O dispatcher 150 can process completion queues 314, 316 entry for SAS/SATA or NVME. For example, when the I/Os complete back from the drive, the I/O Dispatcher 150 can process the Backend LMID completions for SAS, SATA and NVMe.

At step 424, the I/O Dispatcher 150 can issue a parent ACIO 318 (such as the parent LMID) to the I/O manager 140 for processing. At step 426, the I/O manager 140 can decrement the I/O Counter in the Parent LMID. At step 428, the I/O Manager 140 can send the "LDIO Success Reply" 320 to the HCU 170, when the parent I/O counter reaches 0. At step 430, the HCU 170 can complete the I/O 322 to the hosting system 110 with a status "Success."

Even though the steps of method 400 are described with reference to the R0L systems 100, 300 of FIGS. 1 and 3, method 400 may be performed in other R0L systems. The steps of the flowcharts described herein are not all inclusive and may include other steps not shown. The steps described herein may also be performed in an alternative order.

The method 400 facilitates a more efficient splitting of the I/Os at the boundaries of the arms. For example, in some embodiments, one I/O split may be needed for multi-arm I/Os because the drives typically have large capacity (ranging from several gigabytes (GB) to several terabytes (TB)) whereas the maximum I/O data length can be limited to a range of several megabytes (MB). In some embodiments, I/O splitting is necessary at arm boundaries (instead of strip boundaries) and the I/O splitting can be limited to a single split. For example, there can be n?1 boundaries between n arms. For example, the LD in the R0L system having maximum 32 arms can have 31 boundaries. Such number of boundaries reduces the frequency of the multi-arm I/Os and makes I/O splits at arm boundaries a rare event. For example, very few number of I/Os can be split into two I/Os and large amount of data can be read from or written to the same drive in a single read or write I/O. The LDs in the R0L system can be expanded within the storage controller and the hardware can understand the drive sequence and the underlying on-disk data layout. For example, Avenger 1® supports a maximum of 32 drives in an LD in the R0 system. In some embodiments, the same number of the drives is supported for LD in the R0L system. For example, if one drive is of one TB capacity, the R0L system 100 can be expanded to 32 TB capacity and managed within the storage controller.

In some embodiments, the same or substantially the same maximum number of LDs in the R0L system in comparison to the maximum number of JBODs in the JBOD-variants can be supported in the R0L variant of the storage controller. In general, a JBOD storage controller can be configured to present a collection of individual disks as separate units to the host system, without implementing any RAID functionality or combining the disks into logical arrays. This means that the number of JBODs that can be supported by a JBOD storage controller is typically only limited by the maximum number of physical disks it can manage. The JBOD storage controllers can vary in terms of the number of physical disk connections they support, often using interfaces like SATA, SAS, or NVMe. Common JBOD variants include external storage enclosures or disk expansion units that connect to a host system through interfaces such as SCSI, SAS, or Fibre Channel. Therefore, the maximum number of JBODs in JBOD-variants supported by a storage controller depends on the number of disk slots or connections available in the controller, as well as any limitations imposed by the controller firmware or software. For example, some storage controllers may support a few dozen JBODs, while others can handle hundreds or even thousands of JBODs.

In some embodiments, because the R0L variant can target future capacity expansion, a user can add the number of drives in the R0L system that the user needs initially and expand the LD when required until the maximum number of drives supported by the hardware is reached. In some embodiments, the performance of the R0L systems 100 can be comparable to the JBOD systems. In some embodiments, the R0L-only controller variants can be similar to JBOD-only variants from the cost perspective because substantially no additional physical components like the RAID-variant can be necessary.

The I/Os for the LD in the R0L system can be executed completely in the hardware-automated path. In some embodiments, no software involvement outside the controller 120 is necessary. Error handling can be done in the firmware. For example, in some embodiments, error handling can follow the current error handling path for the R0 system in Avenger 1® firmware. In some embodiments, the firmware can monitor the RAID controller 120, which manages the RAID array 105, for any potential errors or malfunctions. The monitoring can include checking for degraded arrays, failed disks, or other issues that may affect the system data integrity or performance. The firmware can be capable of detecting when a disk within the RAID array 105 fails. Such detection can occur through monitoring mechanisms provided by the RAID controller 120 or by analyzing disk health indicators such as SMART (Self-Monitoring, Analysis, and Reporting Technology) data. The firmware can employ mechanisms to correct errors and maintain data integrity within the RAID array. The error correction can involve using error correction codes (ECC). If the RAID system supports hot-swapping and hot-spare functionality, the firmware can handle errors by automatically swapping out a failed disk with a hot-spare disk without interrupting the system operation. Such hot-swapping and hot-spare process facilitates continuous availability of data and reduces downtime. The firmware can continuously monitor the status of the RAID array 105, including disk health, rebuild progress, and overall performance. When critical errors or issues occur, the firmware can generate alerts or notifications to administrators or users, providing relevant information about the problem and potential actions to be taken. The firmware can provide tools and interfaces to manage the RAID configuration, such as adding or removing disks, changing RAID levels, or adjusting various parameters to improve system performance and fault tolerance.

In some embodiments, the processor of the controller 120 can determine a number of physical disks for each segment of data based at least on one or more rules stored in a memory. For example, the rules can determine the segment size, the drive capacity, and the like. In some embodiments, the segment size can determine the size of the data segment that is written to a drive before moving on to the next drive. For example, the block or LBA size is set at the OS level, enabling customization based, for example, on a balance between performance and storage efficiency. In some embodiments, the capacity of the R0L array 105 can be limited by the size of the smallest drive in the array 105. In some embodiments, any capacity on the other drives beyond the size of the smallest drive in the array 105 may not be utilized in the R0L array 105 because the CDU typically requires a fixed size for all drives for practical purposes of calculation. In some embodiments, the RAID controller 120 can manage the array 105 and implement the necessary functionality for the R0L system 100. For example, the RAID controller 120 may provide various configuration options, such as strip size selection, disk ordering, and drive failure detection.

An example calculation is provided below to demonstrate some embodiments of the method 400 described above. For example, in the R0L system 100 can have the "StripsPerArm" size of 50 strips, where the start strip of an I/O is 148 and the I/O spans across five strips, more specifically, strips 148, 149, 150, 151, and 152. The CDU 160 can calculate the "First Logical Arm Number" of the I/O using formula (1) and set its value in the ACIO LMID.

$$\text{First Logical Arm Number} = \text{Start Strip Number} / \text{StripsPerArm} \qquad (1)$$

In the illustrative example, the First Logical Arm Number of the I/O equals to 148 divided by 50 that equals to 2.
The I/O manager 140 can receive the LMID from the CDU 160 and determine if a split at the arm boundary is needed. The last strip number of the Logical Arm Number 2 can be calculated according to formula (2).

$$\text{Logical Arm Number 2} = ((\text{Logical ARM number} + 1) \times \text{StripsPerArm}) - 1 \qquad (2)$$

In the illustrative example, the last strip number of the Logical Arm Number 2 equals to ((2 + 1) × 50) ? 1 that equals to 149. Because the last strip 152 of the I/O is greater than the last strip of the second logical arm 149, the I/O manager 140 can split at the boundary strip 149 the I/O into two backend I/Os (one backend I/O for the second logical arm with strips 148-149 and another backend I/O for the third logical arm with strips 150-152).

A reference is now made to implementation of OCE on the R0L system 100. In some embodiments, the OCE can be driven by firmware. In some embodiments, during the implementation of the OCE on the R0L system 100, the transfer of existing LD data is not necessary because the consecutive strips are stored on the same drive contiguously until the arm boundaries are reached. Because no firmware diversion may be necessary, the ongoing I/Os can be unaffected because they are destined for the original set of drives. For example, the ongoing I/Os are issued within the original LD boundaries; as a result, the I/Os can execute in hardware while the OCE operation is in progress.

From a hardware perspective, the OCE operation requires updating the "NumberOfDataArms" field in the CDU 160 and the RM LD Property Tables for the LD. Also, adding the information of the new drives to the RM Array Info Table may be needed. In some embodiments, the new drives are added at the end, in such implementations a sequence of the existing drives is not changed.

A reference is now made to bookkeeping in firmware for the R0L system 100. Bookkeeping refers to the process of maintaining records and tracking relevant information within the firmware code or memory space. The bookkeeping can involve keeping track of various system parameters, status flags, data structures, or variables that are necessary for the firmware operation and functionality. The bookkeeping in firmware can facilitate proper system operation, resource management, error handling, and configuration management. The bookkeeping can facilitate organizing and managing the internal workings of the firmware code and efficient and reliable functioning of the firmware code. In some embodiments, bookkeeping in firmware for the R0L system 100 can remain substantially similar to the LDs in the R0 systems. In some embodiments, in the R0L systems, the firmware within the RAID controller can be responsible for managing the bookkeeping information related to the RAID array and its LDs. For example, such bookkeeping operations can include an update of the DDF to store the sequence of drives and number of data arms, an update of the PD persistent table, an update of the in-memory LD and RAID information, and the like operations. The firmware can maintain information about configuration of the RAID array 105, such as the RAID level (e.g., R0L), the number and sequence of disks in the array 105, and any specific settings or parameters associated with the array 105. The firmware can keep track of the mapping between the LDs and the physical disks in the RAID 0 array. The firmware can store the information about which portions of data are striped across which disks to facilitate proper data distribution during read and write operations. The firmware can store the strip size; the information about the strip size facilitates proper alignment and organization of data across the disks. For each LD, the firmware can maintain metadata that describes its specific configuration. Such metadata may include details such as LD size, LD number or identifier, caching policies, access permissions, and other relevant information. The firmware can track and manage errors or failures within the RAID array. The firmware can keep a record of any failed disks, error counts, and other diagnostic information to facilitate error detection, fault tolerance, and recovery mechanisms. In an event of a disk failure, the firmware can utilize bookkeeping information to reconstruct the RAID array 105 by redistributing data across the remaining disks. The firmware can track the progress of the rebuild process, facilitating return of the array 105 to a functional state.

In some embodiments, when processing of the OCE operation described above is completed, the "Device Information Changed" event for the LD in the R0L system 100 can be issued to inform the driver about the new LD layout.
In some embodiments, no data movement is required for the OCE operation because of the data layout that is linear on disk. For example, the R0L system 100 can be configured to expand capacity of storage across the logical device without moving data between physical disks. The operation can take substantially less time to complete because there can be one of a few overheads that is to be performed, e.g., to update the hardware and firmware information of the LD and then expose the updated device information to the driver. In some embodiments, the OCE operation is completed quickly and no significant restriction to the OCE operation is necessary.

A reference is now made to implementation of a writeback (WB) operation on the R0L system 100. In some embodiments, the R0L system 100 can have an instantly or near instantly expansible performant similar to JBOD alternative as writethrough LDs. The R0L system facilitates a relatively seamless addition of disks to the existing R0L array without requiring significant downtime or disruption. Such expansion capability typically enables increased storage capacity as needed, making it a flexible and scalable solution. In a JBOD system, the logical volumes or partitions are created above the JBOD at the host level to provide a higher-level storage abstraction. The JBOD system itself may not offer RAID functionality or data striping across the disks. Each logical volume is associated with a specific set of physical disks within the JBOD array. The logical volume created over JBODs can have different policies such as Write-Through (WT), which affect how data modifications are handled. In a WT policy, modifications made to the data can be almost immediately written to the underlying physical disks in the JBOD array. The WT facilitates data consistency and durability in case of power failures or system crashes. The WT policy can result in lower write performance compared to Writeback caching but the WT provides a higher level of data reliability. In the WB policy, data modifications do not immediately update the underlying physical disks. The WB can provide higher write performance because the data is written to the disks in a batch or during specific intervals. The WB caching can introduce a risk of data loss if a power failure or system crash occurs before the data is written back to the disks. When expanding the JBOD system by adding new JBODs at the host level, the logical volumes can be extended to utilize the additional storage capacity relatively seamlessly making the expanded capacity available to the host system without disrupting existing data or operations. In some embodiments, RAID-variants of the storage controller can optionally implement writeback in the R0L system.

The I/O flow in hardware of the R0L system 100 can be similar to the R0 system. The I/O flow can begin when the host system 110 initiates an I/O request, such as a read or write operation. The request is typically generated by an application or operating system. The I/O request is received by the RAID controller 120, which serves as the intermediary between the host system 110 and the RAID array 105. The RAID controller 120 manages the I/O operations and coordinates data transfers between the host system and the RAID array 105. Within the RAID controller 120, the CDU 160 can handle at least partially the I/O flow. The CDU 160 translates the high-level I/O request into lower-level commands that can be executed by the RAID controller. The CDU 160 can send the translated commands to the appropriate components within the RAID controller 120 (for example, the I/O manager 140 and the I/O dispatcher 150) for execution. The sending operation may involve coordinating data transfers, accessing metadata, and distributing data across the disks in the RAID array. In the R0L system 100, the data striping is performed to distribute data across multiple disks for improved performance. The CDU 160 facilitates division of the data into appropriate strips and writing the strips to or reading the strips from the corresponding disks in parallel. The RAID controller 120 interfaces with the individual disks within the RAID array 105 using specific interfaces such as SATA, SAS, or NVMe. The RAID controller 120 manages the communication and data transfer between the RAID controller and the disks. The RAID controller 120 arranges the movement of data between the host system 110 and the RAID array 105. It retrieves data from the disks during read operations and sends data to the disks during write operations. The CDU 160 manages the flow of data to facilitate proper synchronization and alignment. When the data has been retrieved or written to the RAID array 105, the data is sent back to the host system 110 in response to the I/O request. The RAID controller 120 facilitates a proper assembly and delivery of the data to the host system 110 for further processing or storage. In some embodiments, a cache manager can be optimized to store the data of contiguous strips in inter-linked cache segments. The cache manager can be included in the controller 120.

The logic at the RAID manager 130 for handling splits during flush operations can remain substantially the same as for writethrough (WT) operations in the R0L systems 100. The flush operations in the R0L system 100 with a Write-Through (WT) policy facilitates writing almost all data modifications to the underlying disks almost immediately to facilitate data consistency and preventing data loss in case of a power failure or system crash. When the flush operation is initiated, any modified data residing in the cache can be written back to the corresponding locations on the disks. Handling splits during flush operations refers to having a write operation spanning across multiple disks in the array 105. To handle splits, the RAID controller 120 facilitates writing of the data blocks (that are involved in a write operation) to the appropriate disks in almost synchronized manner. The controller 120 can break down the data to be transferred in the write operation. For example, where a write operation involves four data blocks distributed among, for example, two contiguous strips. In the R0L array 105 having with four disks (Arm 0, Arm 1, Arm 2, and Arm 3), the RAID controller 120 can split the write operation into two strips: Strip 1 (corresponding to the I/O 310) and Strip 2 (corresponding to the I/O 312). The controller 120 can write Strip 1 to Arm 2 and Strip 2 to Arm 3 almost simultaneously, concurrently or otherwise in or near real time. Such parallel writing process facilitates improved performance because the data is written to multiple disks almost simultaneously, concurrently or otherwise in or near real time. The term "in or near real time" refers to a minimal delay between the occurrence of an event (for example, writing data to a first disk or executing an I/O operation on the first disk) and the occurrence of another event (for example, writing data to a second disk or executing an OCE operation). When all strips are written, the flush operation is complete.

The following IEEE standard(s), including any draft versions of such standard(s), are hereby incorporated herein by reference in their entirety and are made part of the present disclosure for all purposes IEEE 802.3, IEEE 802.11x, IEEE 802.11ad, IEEE 802.11ah, IEEE 802.11aj, IEEE 802.16 and 802.16a, and IEEE 802.11ac. In addition, although this disclosure may reference aspects of these standard(s), the disclosure is in no way limited by these standard(s).

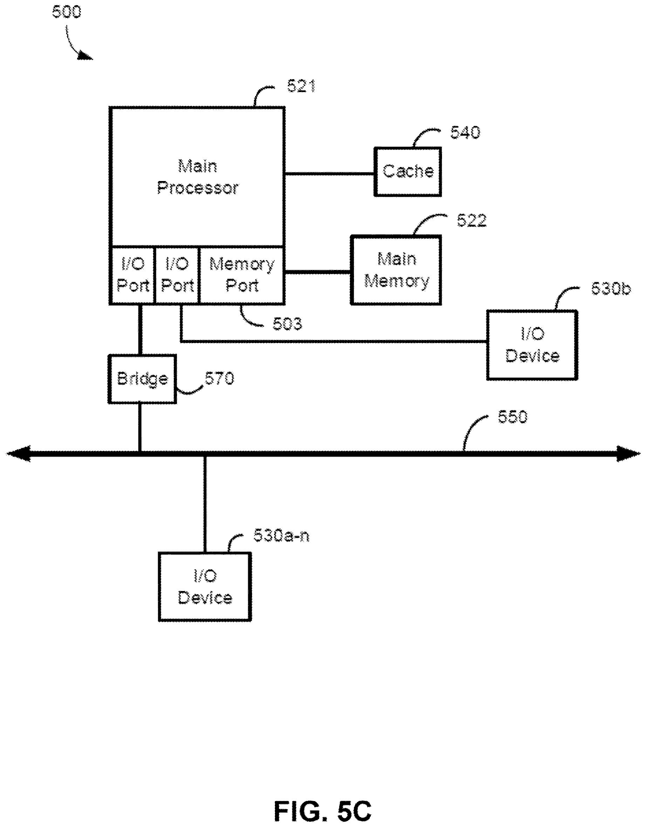

Having discussed specific embodiments of the present solution, it may be helpful to describe aspects of the operating environment as well as associated system components (e.g., hardware elements) in connection with the methods and systems described herein. Referring to FIG. 5A, an embodiment of a network environment is depicted. The network may include or be in communication with one or more storage area networks (SANs), security adapters, or Ethernet converged network adapters (CNAs). In brief overview, the network environment includes a communication system that includes one or more network devices 506, one or more client devices 502 and a network hardware component 592. The client devices 502 may, for example, include laptop computers 502, tablets 502, personal computers 502, wearable devices 502, vehicles 502 (e.g., automobiles, drones, smart vehicles, robotic units, and the like), video game consoles 502, cellular telephone devices 502, smart TV sets 502, Internet of Thing (IoT) devices 502, and any other electronic devices 502 capable of wireless communication. The details of an embodiment of client devices 502 and network device 506 are described in greater detail with reference to FIGS. 5B and 5C. The network environment can be an ad hoc network environment, an infrastructure wireless network environment, a wired network coupled to a wireless network, a subnet environment, or a combination of the foregoing, in one embodiment.

The network devices 506 may be operably coupled to the network hardware 592 via local area network connections. The network hardware 592, which may include one or more routers, gateways, switches, bridges, modems, system controllers, appliances, and the like, may provide a local area network connection for the communication system. Each of the network devices 506 may have an associated antenna or an antenna array to communicate with the client devices in its area. The client devices may register with a particular network device 506 to receive services from the communication system (e.g., via a SU-MIMO or MU-MIMO configuration). For direct connections (i.e., point-to-point communications), some client devices may communicate directly via an allocated channel and communications protocol. Some of the client devices 502 may be mobile or relatively static with respect to the network device 506.

In some embodiments, a network device 506 includes a device or module (including a combination of hardware and software) that allows client devices 502 to connect to a wired network using Wi-Fi, or other standards. A network device 506 may sometimes be referred to as a wireless network device (WAP). A network device 506 may be configured, designed and built for operating in a wireless local area network (WLAN). A network device 506 may connect to a router (e.g., via a wired network) as a standalone device in some embodiments. In other embodiments, a network device 506 can be a component of a router. A network device 506 can provide multiple devices access to a network. A network device 506 may, for example, connect to a wired Ethernet connection and provides wireless connections using radio frequency links for other devices 502 to utilize that wired connection. A network device 506 may be built and configured to support a standard for sending and receiving data using one or more radio frequencies. Those standards, and the frequencies they use may be defined by the IEEE (e.g., IEEE 802.11 standards). A network device 506 may be configured and used to support public Internet hotspots, and on an internal network to extend the network's Wi-Fi signal range.

In some embodiments, the network devices 506 may be used for in-home or in-building wireless networks (e.g., IEEE 802.11, Bluetooth, ZigBee, any other type of radio frequency-based network protocol or variations thereof). Each of the client devices 502 may include a built-in radio or is coupled to a radio. Such client devices 502 and network devices 506 may operate in accordance with the various aspects of the disclosure as presented herein to enhance performance, reduce costs and size, and enhance broadband applications. Each client device 502 may have the capacity to function as a client node seeking access to resources (e.g., data, and connection to networked nodes such as servers) via one or more network devices.

The network connections may include any type and form of network and may include any of the following: a point-to-point network, a broadcast network, a telecommunications network, a data communication network, a computer network. The topology of the network may be a bus, star, or ring network topology. The network may be of any such network topology as known to those ordinarily skilled in the art capable of supporting the operations described herein. In some embodiments, different types of data may be transmitted via different protocols. In other embodiments, the same types of data may be transmitted via different protocols.

The client device(s) 502 and network device(s) 506 may be deployed as and executed on any type and form of computing device, such as a computer, network device, or appliance capable of communicating on any type and form of network and performing the operations described herein. FIGS. 5B and 5C depict block diagrams of a computing device 500 useful for practicing an embodiment of the client device 502 or network device 506. As shown in FIGS. 5B and 5C, each computing device 500 includes a central processing unit 521, and a main memory or main memory unit 522. As shown in FIG. 5B, a computing device 500 may include a storage device 528, an installation device 516, a network interface 518, an I/O controller 523, display devices 524a-501n, a keyboard 526 and a pointing device 527, such as a mouse. The storage device 528 may include, without limitation, an operating system and software. As shown in FIG. 5C, each computing device 500 may also include additional optional elements, such as a memory port 503, a bridge 570, one or more input/output devices 530a-530n (generally referred to using reference numeral 530), and a cache memory 540 in communication with the central processing unit 521.

"Circuitry" can refer to an interconnected arrangement of electronic components and pathways that allow the flow of electrical signals within a device, system, or application. In some embodiments, a single component circuitry can be an electronic component such as a resistor, capacitor, or transistor that performs a certain function within an electronic system. In some embodiments, multiple components working together in circuitry can include coordination of various electronic components. In some embodiments, the circuitry can include hardware components, such as integrated circuits, transistors, resistors, capacitors, and connectors, as well as combinations of hardware and software or firmware elements that can operate together to perform various functions. The multiple components can include separate components such as sensors, microcontrollers, memory modules, communication interfaces, or power management circuits, which are interconnected to form a functional system. For example, the circuitry can include microcontrollers or processors that execute software instructions to control the behavior of the hardware components. For example, the circuitry processors can run programs that enable the device or system to perform various tasks such as data processing and communication. In some embodiments, the circuitry can be a general-purpose processor executing software. The components may be physically not contained within the same device, for example, the components can be distributed across different devices connected through wired or wireless interfaces.

The central processing unit (CPU) 521 is any logic circuitry that responds to and processes instructions fetched from the main memory unit 522. In many embodiments, the central processing unit 521 is provided by a microprocessor unit, such as those manufactured by Intel Corporation of Mountain View, California; those manufactured by International Business Machines of White Plains, New York; or those manufactured by Advanced Micro Devices of Sunnyvale, California. The computing device 500 may be based on any of these processors, or any other processor capable of operating as described herein. The CPU can be a programmable parallel processor.

Other programmable parallel processors can include a graphics processing unit (GPU) and a neural processor. The GPU is a programmable parallel processor that can perform complex computations for graphics rendering and general-purpose computing tasks. The GPU consists of processing cores interconnected through a high-bandwidth memory interface and a bus system, enabling efficient parallel processing. The processing core of the GPU can be equipped with dedicated arithmetic logic units and memory caches, allowing for simultaneous execution of multiple computational threads. To optimize graphics rendering pipelines, the GPU can incorporate the following hardware components: texture units and rasterizers. The GPU can employ optimized algorithms and data parallelism techniques to accelerate computations, resulting in superior performance compared to conventional CPU. The GPU can be programmable using graphics APIs and parallel computing frameworks, enabling scientific simulations, machine learning, and data analytics.

Main memory unit 522 may be one or more memory chips capable of storing data and allowing any storage location to be accessed by the microprocessor 521, such as any type or variant of Static random-access memory (SRAM), Dynamic random-access memory (DRAM), Ferroelectric RAM (FRAM), NAND Flash, NOR Flash and Solid-State Drives (SSD). The main memory 522 may be based on any of the above-described memory chips, or any other available memory chips capable of operating as described herein. In the embodiment shown in FIG. 5B, the processor 521 communicates with main memory 522 via a system bus 550 (described in more detail below). FIG. 5C depicts an embodiment of a computing device 500 in which the processor communicates directly with main memory 522 via a memory port 503. For example, in FIG. 5C the main memory 522 may be DRAM.

FIG. 5C depicts an embodiment in which the main processor 521 communicates directly with cache memory 540 via a secondary bus, sometimes referred to as a backside bus. In other embodiments, the main processor 521 communicates with cache memory 540 using the system bus 550. Cache memory 540 typically has a faster response time than main memory 522 and is provided by, for example, SRAM, BSRAM, or EDRAM. In the embodiment shown in FIG. 5C, the processor 521 communicates with various I/O devices 530 via a local system bus 550. Various buses may be used to connect the central processing unit 521 to any of the I/O devices 530, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 524, the processor 521 may use an Advanced Graphics Port (AGP) to communicate with the display 524. FIG. 5C depicts an embodiment of a computer or computer system 500 in which the main processor 521 may communicate directly with I/O device 530b, for example via HYPERTRANSPORT, RAPIDIO, or INFINIBAND communications technology. FIG. 5C also depicts an embodiment in which local busses and direct communication are mixed: the processor 521 communicates with I/O device 530a using a local interconnect bus while communicating with I/O device 530b directly.

A wide variety of I/O devices 530a-530n may be present in the computing device 500. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices may be controlled by an I/O controller 523 as shown in FIG. 5B. The I/O controller may control one or more I/O devices such as a keyboard 526 and a pointing device 527, e.g., a mouse or optical pen. Furthermore, an I/O device may also provide storage and an installation medium 516 for the computing device 500. In still other embodiments, the computing device 500 may provide USB connections (not shown) to receive handheld USB storage devices such as the USB Flash Drive line of devices manufactured by Twintech Industry, Inc. of Los Alamitos, California.

Referring again to FIG. 5B, the computing device 500 may support any suitable installation device 516, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 500 may further include a storage device, such as one or more hard disk drives or redundant arrays of independent disks, for storing an operating system and other related software, and for storing application software programs such as any program or software 520 for implementing (e.g., software 520 configured and designed for) the systems and methods described herein. In some embodiments, any of the installation devices 516 could be used as the storage device. In some embodiments, the operating system and the software can be run from a bootable medium.

Furthermore, the computing device 500 may include a network interface 518 to interface to the network 504 through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 500 communicates with other computing devices 500' via any type and form of gateway or tunneling protocol such as Secure Socket Layer (SSL) or Transport Layer Security (TLS). The network interface 518 may include a built-in network adapter, network interface card, PCMCIA network card, card bus network adapter, wireless network adapter, USB network adapter, modem or any other device suitable for interfacing the computing device 500 to any type of network capable of communication and performing the operations described herein.

In some embodiments, the computing device 500 may include or be connected to one or more display devices 524a-524n. As such, any of the I/O devices 530a-530n and/or the I/O controller 523 may include any type and/or form of suitable hardware, software, or combination of hardware and software to support, enable or provide for the connection and use of the display device(s) 524a-524n by the computing device 500. For example, the computing device 500 may include any type and form of video adapter, video card, driver, and library to interface, communicate, connect or otherwise use the display device(s) 524a-524n. In one embodiment, a video adapter may include multiple connectors to interface to the display device(s) 524a-524n. In other embodiments, the computing device 500 may include multiple video adapters, with each video adapter connected to the display device(s) 524a-524n. In some embodiments, any portion of the operating system of the computing device 500 may be configured for using multiple displays 524a-524n. One ordinarily skilled in the art will recognize and appreciate the various ways and embodiments that a computing device 500 may be configured to have one or more display devices 524a-524n.

In further embodiments, an I/O device 530 may be a bridge between the system bus 550 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a Serial Attached small computer system interface bus, a USB connection, or a HDMI bus.

A computing device or system 500 of the sort depicted in FIGS. 5B and 5C may operate under the control of an operating system, which controls scheduling of tasks and access to system resources. The computing device 500 can be running any operating system such as any of the versions of the MICROSOFT WINDOWS operating systems, the different releases of the Unix and Linux operating systems, any version of the MAC OS for Apple computers, any embedded operating system, any real-time operating system, any open source operating system, any proprietary operating system, any operating systems for mobile computing devices, or any other operating system capable of running on the computing device and performing the operations described herein. Typical operating systems include, but are not limited to Android, produced by Google Inc.; WINDOWS 7 and 8, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and form of a Unix operating system, among others.

The computer system 500 can be any workstation, telephone, desktop computer, laptop or notebook computer, server, handheld computer, mobile telephone or other portable telecommunications device, media playing device, a gaming system, mobile computing device, or any other type and form of computing, telecommunications or media device that is capable of communication. The computer system 500 has sufficient processor power and memory capacity to perform the operations described herein.

In some embodiments, the computing device 500 may have different processors, operating systems, and input devices consistent with the device. For example, in one embodiment, the computing device 500 is a smart phone, mobile device, tablet or personal digital assistant. In still other embodiments, the computing device 500 is an Android-based mobile device, an iPhone smart phone manufactured by Apple Computer of Cupertino, California, or a Blackberry or WebOS-based handheld device or smart phone, such as the devices manufactured by Research In Motion Limited. Moreover, the computing device 500 can be any workstation, desktop computer, laptop or notebook computer, server, handheld computer, mobile telephone, any other computer, or other form of computing or telecommunications device that is capable of communication and that has sufficient processor power and memory capacity to perform the operations described herein. Aspects of the operating environments and components described above will become apparent in the context of the systems and methods disclosed herein.

It should be noted that certain passages of this disclosure can reference terms such as "first" and "second" in connection with devices signals, data, inputs, channels, and the like for purposes of identifying or differentiating one from another or from others. These terms are not intended to merely relate entities (e.g., a first input and a second input) temporally or according to a sequence, although in some cases, these entities can include such a relationship. Nor do these terms limit the number of possible entities (e.g., devices) that can operate within a system or environment.

It should be understood that the systems described above can provide multiple ones of any or each of those components. In addition, the systems and methods described above can be provided as one or more computer-readable programs or executable instructions, programmable circuits, or digital logic embodied on or in one or more articles of manufacture. The article of manufacture can be a floppy disk, a hard disk, a CD-ROM, a flash memory card, a PROM, a RAM, a ROM, ASIC, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

While the foregoing written description of the methods and systems enables one of ordinary skill to make and use various embodiments of these methods and systems, those of ordinary skill will understand and appreciate the existence of variations, combinations, and equivalents of the specific embodiment, method, and examples herein. The present methods and systems should therefore not be limited by the above-described embodiments, methods, and examples, but by all embodiments and methods within the scope and spirit of the disclosure.

**Claims**

1.  A method comprising:

    receiving, by one or more controllers, a segment of data to write to a logical device, the logical device comprising a plurality of physical disks; and
    causing, by the one or more controllers, to store a first plurality of contiguous data strips of the segment of data on a first physical disk of the plurality of the physical disks up to a first threshold,

    wherein in response to the one or more controllers and reaching the first threshold, a second plurality of contiguous data strips of the segment of data are stored on a second physical disk of the plurality of the physical disks, the second plurality of contiguous data strips following sequentially after the first plurality of contiguous data strips.

2.  A method of claim 1, wherein
    the segment of data is split into the first plurality of contiguous data strips and the second plurality of contiguous data strips.

3.  The method of claim 2, wherein
    the segment of data is split at a boundary between the first physical disk and the second physical disk into the first plurality of contiguous data strips and the second plurality of contiguous data strips.

4.  The method of any one of the claims 1 to 3,

    wherein adjacent physical disks have boundaries between each other, and
    wherein a quantity of the boundaries between the adjacent physical disks equals a quantity of the adjacent physical disks less one.

5.  The method of any one of the claims 1 to 4, wherein
    the first threshold is set to a value equal to or less than a capacity of the first physical disk of the plurality of the physical disks to store segments of data.

6.  The method of any one of the claims 1 to 5, further comprising

causing, by the one or more controllers, to:
distribute across the first physical disk and the second physical disk the first plurality of contiguous data strips of the segment of data on the first physical disk and the second plurality of contiguous data strips of the segment of data on the second physical disk.

7. The method of any one of the claims 1 to 6, further comprising
causing, by the one or more controllers, to:
generate mapping tables for each physical disk that map logical addresses for the logical device to physical addresses on the physical disks.

8. The method of any one of the claims 1 to 7, further comprising
causing, by the one or more controllers, to:
determine a number of physical disks for each segment of data based at least on one or more rules stored in a memory.

9. A circuitry comprising one or more controllers, wherein the circuitry is configured to control and/or carry out a method as set forth in any one of the preceding method claims.

10. A system, comprising one or more controllers configured to:

   receive a segment of data to write to a logical device, the logical device comprising a plurality of physical disks; and
   cause a first plurality of contiguous data strips of the segment of data to store on a first physical disk of the plurality of the physical disks up to a first threshold,

   wherein in response to the one or more controllers and reaching the first threshold, a second plurality of contiguous data strips of the segment of data are stored on a second physical disk of the plurality of the physical disks, the second plurality of contiguous data strips following sequentially after the first plurality of contiguous data strips.

11. A system of claim 10, wherein
the one or more controllers are further configured to cause:
splitting of the segment of data into the first plurality of contiguous data strips and the second plurality of contiguous data strips.

12. The system of claim 10 or 11, wherein
the first threshold is set to a value equal to or less than a capacity of the first physical disk of the plurality of the physical disks to store segments of data.

13. The system of any one of the claims 10 to 12, wherein
the one or more controllers are further configured to cause capacity of storage across the logical device to expand without moving data between the physical disks.

14. The system of any one of the claims 10 to 13, wherein
the one or more controllers are further configured to cause:

   performing an online capacity expansion (OCE) operation;
   issuing one or more input/output (I/O) operations to store the first plurality of contiguous data strips of the segment of data on the first physical disk up to the first threshold; and
   executing the one or more I/O operations on the first physical disk in or near real time when the OCE operation is executed.

15. The system of any one of the claims 10 to 14, wherein
a maximum quantity of the logical devices supported by the system is equal to a quantity of Just a Bunch Of Disks (JBOD) variants.

100

**FIG. 1**

200

| ARM 0 | ARM 1 | ... | ARM n − 1 |
|---|---|---|---|
| Strip 0 | Strip n | ... | Strip (n − 1) × n |
| Strip 1 | Strip n + 1 | ... | Strip (n − 1) × n + 1 |
| ... | ... | ... | ... |
| Strip n − 1 | Strip 2n − 1 | ... | Strip (n × n) − 1 |

# FIG. 2

**FIG. 3**

400

```
┌─────────────────────────────────┐
│         Issue MPI to CDU        │──402
└─────────────────────────────────┘
                │
                ▼
┌─────────────────────────────────┐
│      Translate MPI to ACIO LMID  │──404
└─────────────────────────────────┘
                │
                ▼
┌─────────────────────────────────┐
│     Set First Logical Arm in ACIO│──406
└─────────────────────────────────┘
                │
                ▼
┌─────────────────────────────────┐
│    Issue WT_RAID_IO (LD, ACIO) to│──408
│          I/O Manager            │
└─────────────────────────────────┘
                │
                ▼
┌─────────────────────────────────┐
│      Generate SBKIO/NBKIO       │──410
└─────────────────────────────────┘
                │
                ▼
┌─────────────────────────────────┐
│       Split multi-arm IOs and    │──412
│     increment Parent IO Counter  │
└─────────────────────────────────┘
                │
                ▼
┌─────────────────────────────────┐
│  Issue SBKIO/NBKIO to I/O Dispatcher│──414
└─────────────────────────────────┘
                │
                ▼
┌─────────────────────────────────┐
│        Issue I/Os to drives      │──416
└─────────────────────────────────┘
                │
                ▼
┌─────────────────────────────────┐
│          Process I/Os            │──418
└─────────────────────────────────┘
                │
                ▼
┌─────────────────────────────────┐
│   Issue Completion Queues to I/O │──420
│           Dispatcher            │
└─────────────────────────────────┘
                │
                ▼
┌─────────────────────────────────┐
│  Process Completion Queue entry for│──422
│        SAS/SATA or NVME          │
└─────────────────────────────────┘
                │
                ▼
┌─────────────────────────────────┐
│   Issue Parent ACIO to I/O Manager│──424
└─────────────────────────────────┘
                │
                ▼
┌─────────────────────────────────┐
│    Decrement Parent IO Counter   │──426
└─────────────────────────────────┘
                │
                ▼
┌─────────────────────────────────┐
│  Send LDIO Success Reply to HCU if│──428
│    Parent IO Counter reaches 0   │
└─────────────────────────────────┘
                │
                ▼
┌─────────────────────────────────┐
│   Complete IO to host with Success│──430
└─────────────────────────────────┘
```

# FIG. 4

Device 502

Device 502

| Network Device 506 | LAN connection 504 | Node 592 | Other Network 504 |

LAN connection 504

Device 502

Device 502

| Network Device 506 |

FIG. 5A

**FIG. 5B**

500

521

Main
Processor

540

Cache

I/O
Port

I/O
Port

Memory
Port

522

Main
Memory

503

530b

I/O
Device

Bridge    570

550

530a-n

I/O
Device

**FIG. 5C**

Europäisches
Patentamt

European
Patent Office

Office européen
des brevets

# EUROPEAN SEARCH REPORT

Application Number

EP 24 19 5931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 301 660 B (SHENZHEN UNITED INFORMATION TECH CO LTD) 22 August 2023 (2023-08-22) * paragraph [0002] - paragraph [0113]; figures 1-5 * | 1-15 | INV. G06F3/06 |
| X | CN 109 726 036 A (HUAWEI TECH CO LTD) 7 May 2019 (2019-05-07) * paragraph [0037] - paragraph [0039]; figure 3 * | 1-6,9-12 | |
| A | | 7,8, 13-15 | |
| A | US 2021/349780 A1 (KI YANG SEOK [US] ET AL) 11 November 2021 (2021-11-11) * the whole document * | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 6 January 2025 | Filip, Liviu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 5931

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2025

| Patent document cited in search report | | | Publication date | Patent family member(s) | | | Publication date |
|---|---|---|---|---|---|---|---|
| CN 116301660 | B | | 22-08-2023 | NONE | | | |
| CN 109726036 | A | | 07-05-2019 | CN | 109726036 | A | 07-05-2019 |
| | | | | WO | 2020103512 | A1 | 28-05-2020 |
| US 2021349780 | A1 | | 11-11-2021 | CN | 113641529 | A | 12-11-2021 |
| | | | | KR | 20210137921 | A | 18-11-2021 |
| | | | | TW | 202211024 | A | 16-03-2022 |
| | | | | US | 2021349780 | A1 | 11-11-2021 |

EPO FORM P0459

For more details about this annex : see Official Journal of the European Patent Office, No. 12/82